# EUROPEAN PATENT APPLICATION

(11) **EP 0 866 420 A2**
(43) Date of publication of application: **23.09.1998**
(21) Application number: 98302059.5
(22) Date of filing: 18.03.1998
(51) Int. Cl.: G06K 19/06, G06K 7/12

(54) **Identification card or badge**

(30) Priority: 19.03.1997 GB 9705677
(71) Applicant: Time and Data Systems International Limited, Poole, Dorset BH17 0RE (GB)
(72) Inventor: Rudland, Peter, Broadstone, Dorset, BH18 9HT (GB)
(74) Representative: Pedder, James Cuthbert

(57) **Abstract**

A card or badge for use for identification purposes comprises a code layer (5) containing a code (6 to 9) and concealed within the card so that the code is invisible to the naked eye when viewed in visible light, but is readable by an opto-electronic reader using infra-red radiation. The code comprises successive digits represented by a line of infra-red transmissive regions (7, 8) which alternate with infra-red opaque regions (6), the regions (6, 7, 8) being located along a line parallel to an edge of the card. A series of infra-red transmissive subsidiary code regions (9) are provided in the line of infra-red transmissive regions (7, 8). These subsidiary code regions (9) are of a different tansmissivity from the said transmissive regions (7, 8) whereby the overall light levels seen as the card or badge is passed through or past a reading device show a ripple effect.

## Description

This invention relates to cards or badges for identification purposes and carrying data and in particular to cards or badges in which the data is carried in a concealed manner and can be read from the card or badge by a reading device.

These cards have a wide range of applications, one of which is to operate electronically controlled locks which are responsive to the concealed data on the card. The data may include the identity of the card holder and used to maintain a record of those entering a controlled entry location. Other uses are to provide controlled access to a computer system for authorised users or to time recording systems to monitor the times of arrival and departure of employees at a place of work.

In these types of security cards or badges it is essential that the data carried by the card or badge cannot be changed or copied to enable unauthorised use of the card or badge.

Various methods are used to encode the data within the card or badge, one such method being to use a laminated card in which an inner layer carries data recorded as a series of areas of differing opacity to infra-red radiation. The data is usually recorded in binary form with transparent regions or windows representing binary digits of one value and partially transparent or opaque regions or windows representing binary digits of the other value. The outer layers of the card are bonded to the inner layer and are transparent to infra-red radiation but are opaque to radiation in the visible spectrum. Such use of opaque and clear areas forms the subject of the Applicant's prior Patent Nos. UK 2108906 and UK 2175539.

Thus the data can only be read from the card by means of a photocell sensitive to infra-red radiation passing through the card from a source of infra-red radiation, but cannot be read by visual inspection of the card.

Recently current technology has been used by counterfeiters to read the codes and to reproduce them on transparent film. Such counterfeiting has rendered the absolute security of the card vulnerable.

The present invention seeks to reduce the possibility of the above counterfeiting and to provide an improved encoding of the code to make the attempts at reproducing the code more difficult to provide a printed code that can be reliably sensed in the harsh environments in which it is used, to be compatible with earlier code readers and restore the security of the card.

According to the invention, a card or badge for use for identification purposes comprises a code layer containing a code and concealed within the card so that the code is invisible to the naked eye when viewed in visible light, but is readable by an opto-electronic reader using infra-red radiation, the code comprising successive digits represented by a line of infra-red transmissive regions which alternate with infra-red opaque regions the regions being located along a line parallel to an edge of the card, and a series of infra-red transmissive subsidiary code regions in the line of infra-red transmissive regions and of a different tansmissivity than the said transmissive regions whereby the overall light levels seen as the card or badge is passed through or past a reading device show a ripple effect.

Preferably, the code is binary and a first binary digit is represented by a substantially fully transmissive region of the infra-red transmissive regions.

The second binary digit may be represented by a region of significantly lower infra-red transmissivity than the substantially fully transmissive regions and subsidiary code regions may have a transmissivity between the transmissivity of the regions representing the first binary digit and the regions (8) representing the second binary digit.

The subsidiary code regions may have a transmissivity close to that of the regions representing the first binary digit and also represent first binary digits whereby the infra-red transmission of the first binary digits exhibits a "ripple" effect. The transmissivity of the subsidiary code regions may be at a level at which it will be read as a first binary digit in existing reading machines not equipped to read the subsidiary code of the subsidiary code regions.

The code layer may be concealed between two layers of visually optically black infra-red transparent plastics material.

An embodiment of the invention will now be described by way of example only, with reference to the accompanying drawings, in which:
Fig. 1 is an exploded perspective view of a laminated card;
Fig. 2 is a diagram of the output current of a typical signal from a coded card at present in use; and
Fig. 3 is a diagram of the output current of a modified signal from the improved "ripple" code according to the invention.

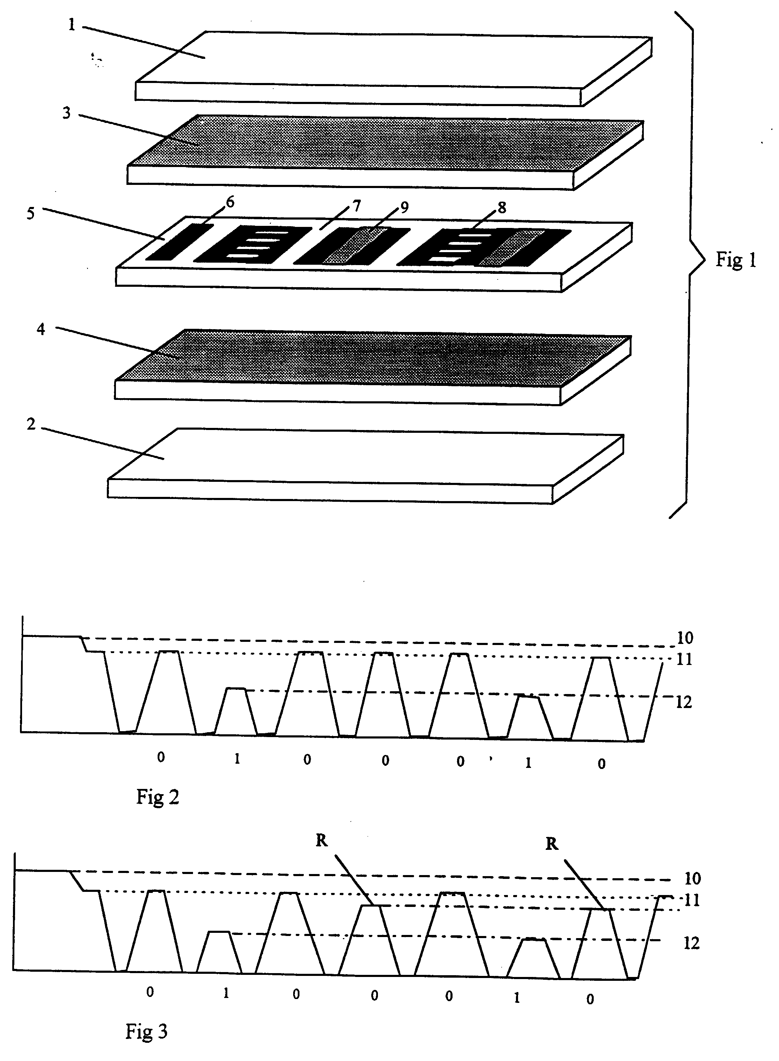

The exploded view of the card shown in Fig. 1 comprises a laminate having transparent outer layers 1 and 2, optically black but infra-red transparent layers 3 and 4 which sandwich a code layer 5 which is printed with bars 6, gaps 7 and semi-obscured gaps 8 that comprise the main code elements, and has "ripple" stripes or regions 9 printed between certain of the bars 6.

The present coding method passes a narrow beam of infra-red light through an infra-red transparent card that is printed with a series of opaque bars. Areas between these bars are either clear or shaded to indicate a binary "0" or "1" state. A sensor behind the card detects transmitted light levels as the shadow of the code passes over it and a microcomputer works out from the received light levels the pattern of binary digits in the card.

Normally the code is concealed within layers of optically black, but infra-red transparent plastics that conceal it from the naked eye. Under very bright red-rich light the code is visible and can be seen clearly by using a magnifying glass.

The improved code, according to the present invention, is to add to the card a series of almost transparent stripes 9 in pre-defined positions across the code so that the overall light levels seen as the card is passed through a reading device show a "ripple" effect along their peaks. The amount of "ripple" would be small compared with the difference between the binary "0" and "1" levels, but big enough to be detected by a microcomputer. The binary "0" and "1" levels allow the codes to be read by older equipment which does not detect the "ripple" effect. The "ripple" striping gives a small, defined reduction in IR light transmission but still large enough to be readily detected by modern electronic equipment. Security of the coded card is enhanced because it is difficult to reproduce a compatible striping layer to give the correct small level of IR reproduction, so making it hard to counterfeit the "ripple" code.

The density of the "ripple" striping would be such that the naked eye would not notice it very easily when viewed against a bright light source. To print the "ripple" patterns, a commercially available infra-red opaque ink that is almost transparent to the naked eye is used, but this is not essential to the concept as any thin layer of ink would be hard to see. The "ripple" stripping may be printed onto the plastics material, in a fixed pattern using special ink with defined IR loss, before the main code is printed by its own coding equipment, or is preferably printed under computer control between defined bars specific to each different code pattern, using special ink with defined IR loss.

The diagram of the output current of a typical signal for an existing code is shown in Fig. 2 in which the level indicated by the horizontal line 10 is a 'no card level', the line 11 is a binary "0" digit level and the line 12 shows a binary "1" digit level.

Fig. 3 is a similar view to Fig. 2 but illustrates the modified "ripple" code signal according to the invention, the "ripple" effect being shown at the areas marked R of the signal.

The improvement is economical to incorporate in existing cards or badges in that the "ripple" pattern can be printed onto the code sheet by equipment similar to that which prints the main code elements but using an ink with the required IR loss characteristics. The latest design is compatible with existing reading devices which would not sense the "ripple" coding levels.

## Claims

1. A card or badge for use for identification purposes comprising a code layer (5) containing a code (6 to 9) and concealed within the card so that the code is invisible to the naked eye when viewed in visible light, but is readable by an opto-electronic reader using infra-red radiation, the code comprising successive digits represented by a line of infra-red transmissive regions (7, 8) which alternate with infra-red opaque regions (6), the regions (6, 7, 8) being located along a line parallel to an edge of the card, characterised by a series of infra-red transmissive subsidiary code regions (9) in the line of infra-red transmissive regions (7, 8) and of a different tansmissivity from the said transmissive regions (7, 8) whereby the overall light levels seen as the card or badge is passed through or past a reading device show a ripple effect.

2. A card or badge as claimed in claim 1, characterised in that the code is binary and a first binary digit is represented by a substantially fully transmissive region (7) of the infra-red transmissive regions (7, 8).

3. A card or badge as claimed in claim 2, characterised in that the second binary digit is represented by a region (8) of significantly lower infra-red transmissivity than the substantially fully transmissive regions (7).

4. A card or badge as claimed in claim 2, characterised in that the transmissivity of the second binary digit is controlled by a pattern printed onto the code layer in infra-red opaque ink.

5. A card or badge as claimed in claim 3 or 4. characterised in that subsidiary code regions (9) have a transmissivity between the transmissivity of the regions (7) representing the first binary digit and the regions (8) representing the second binary digit.

6. A card or badge as claimed in claim 5, characterised in that the subsidiary code regions (9) have a transmissivity close to that of the regions (7) representing the first binary digit and also represent first binary digits whereby the infra-red transmission of the first binary digits exhibits a "ripple" effect.

7. A card or badge as claimed in claim 6, characterised in that the transmissivity of the subsidiary code regions (9) is at a level at which it will be read as a first binary digit in existing reading machines not equipped to read the subsidiary code of the subsidiary code regions (9).

8. A card or badge as claimed in any preceding claim, characterised in that the code layer (5) is concealed between two layers (3, 4) of visually optically black infra-red transparent plastics material.

9. A card or badge as claimed in any preceding claim, characterised in that that the subsidiary code regions (9) comprise a printed pattern printed using an infra-red opaque ink that is almost transparent to the naked eye.

10. A card or badge as claimed in any preceding claim, characterised in that the subsidiary code regions (9) are located in positions which will provide a code for verifying the main code carried by the card or badge.
